# EUROPEAN PATENT SPECIFICATION

(11) **EP 3 499 999 B1**
(45) Date of publication and mention of the grant of the patent: **07.08.2024**
(21) Application number: 16916033.0
(22) Date of filing: 18.09.2016
(51) Int. Cl.: H04W 72/02, H04W 72/40

(54) **DATA SENDING METHOD, COMMUNICATION NODE AND SYSTEM**
DATENSENDEVERFAHREN, KOMMUNIKATIONSKNOTEN UND SYSTEM
PROCÉDÉ D'ENVOI DE DONNÉES, NOEUD DE COMMUNICATION, ET SYSTÈME

(43) Date of publication of application: 19.06.2019
(73) Proprietor: Huawei Technologies Co., Ltd., Longgang District Shenzhen, Guangdong 518129 (CN)
(72) Inventor: LI, Mingchao, Shenzhen Guangdong 518129 (CN); HAN, Guanglin, Shenzhen Guangdong 518129 (CN); XIAO, Xiao, Shenzhen Guangdong 518129 (CN); HUA, Yao, Shenzhen Guangdong 518129 (CN)
(74) Representative: Isarpatent
(86) International application number: PCT/CN2016/099227
(87) International publication number: WO 2018/049653

(56) References cited:
- WO-A1-2015/139592
- WO-A1-2015/139884
- WO-A1-2016/045090
- CN-A- 105 101 430
- US-A1- 2015 264 677
- US-A1- 2015 312 960
- US-A1- 2016 374 135
- US-A1- 2017 006 653
- INTERDIGITAL COMMUNICATIONS: "Mode Selection and Resource Pool Selection for D2D UEs", vol. RAN WG2, no. Valencia, SP; 20140331 - 20140404, 22 March 2014 (2014-03-22), XP050792824, Retrieved from the Internet <URL:http://www.3gpp.org/ftp/Meetings_3GPP_SYNC/RAN2/Docs/> [retrieved on 20140322]
- HUAWEI ET AL: "Configuration of PC5 and/or Uu for V2V transport", vol. RAN WG2, no. Dubrovnik, Croatia; 20160411 - 20160415, 2 April 2016 (2016-04-02), XP051082362, Retrieved from the Internet <URL:http://www.3gpp.org/ftp/tsg_ran/WG2_RL2/TSGR2_93bis/Docs/> [retrieved on 20160402]

## Description

### TECHNICAL FIELD

Embodiments of the present invention relate to communications systems, and in particular, to a data sending method, a base station, and a communications node.

### BACKGROUND

Device-to-device (D2D) communication, vehicle-to-vehicle (V2V) communication, vehicle-to-infrastructure (V2I) communication, and vehicle-to-pedestrian (V2P) communication are technologies of direct communication between communications nodes, and the V2V communication, the V2I communication, and the V2P communication are collectively referred to as V2X communication.

Generally, communication between communications nodes is mainly classified into two modes: a mode 1 and a mode 2. The mode 1 is a mode in which a base station allocates information such as a time-frequency resource used for communication between communications nodes to the communications node, and then the communications node communicates with another communications node by using the time-frequency resource allocated by the base station. The time-frequency resource used for communication between communications nodes in the mode 1 is scheduled based on the base station. The mode 2 is a mode in which a communications node selects, from a preset time-frequency resource pool, information such as a time-frequency resource used for communication between communications nodes, and then the communications node communicates with another communications node by using the selected time-frequency resource. The time-frequency resource used for communication between communications nodes in the mode 2 is selected by the communications node. US 2015/0264677 A1 is an illustration of the use of mode 1 and mode 2.

There is an urgent need for a technical solution that can improve flexibility of communication between communications nodes in the industry.

### SUMMARY

Embodiments of the present invention provide a data sending method, a communications node and a system in accordance with the independent claims to improve flexibility of communication between communications nodes. Preferred embodiments are defined in the dependent claims.

According to the foregoing solutions, the communications node determines the third information, the third information includes the at least one of the first information and the second information, the first information is allocated by the base station, the second information is determined by the communications node, and the communications node flexibly selects the third information for communication between communications nodes. In this way, flexibility of the communication between the communications nodes is improved.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description merely show some embodiments of the present invention, and a person of ordinary skill in the art can derive other implementations from these accompanying drawings without creative efforts.
FIG. 1 is a schematic architectural diagram of a system according to an embodiment of the present invention;
FIG. 2 shows a data sending method according to an embodiment of the present invention;
FIG. 3 shows a communications node according to an embodiment of the present invention;
FIG. 4 shows another communications node according to an embodiment of the present invention;
FIG. 5 shows a base station according to an embodiment of the present invention; and
FIG. 6 shows another base station according to an embodiment of the present invention.

### DESCRIPTION OF EMBODIMENTS

Network architectures and service scenarios that are described in the embodiments of the present invention are used to describe the technical solutions in the embodiments of the present invention more clearly, but are not intended to limit the technical solutions provided in the embodiments of the present invention. A person of ordinary skill in the art may learn that, with evolution of the network architectures and emergence of a new service scenario, the technical solutions provided in the embodiments of the present invention are also applicable to a similar technical problem.

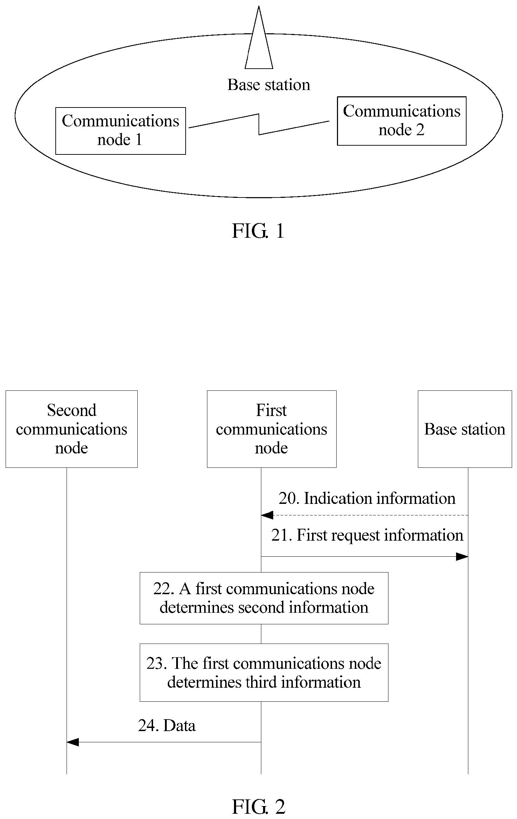

As shown in FIG. 1, a communications node 1 is a communications node that accesses a base station, and a communications node 2 is also a communications node that accesses the base station. When D2D communication or V2X communication is performed in a mode 1, the base station allocates a time-frequency resource to the communications node 1 and the communications node 2, and the communications node 1 sends data to the communications node 2 on the time-frequency resource. The mode 1 has an advantage of high reliability. However, a communications node needs to send signaling to the base station to request the base station to allocate the time-frequency resource. Therefore, the mode 1 has a disadvantage of a high delay and low flexibility. When D2D communication or V2X communication is performed in a mode 2, the communications node 1 first selects a time-frequency resource from a preset time-frequency resource pool, and then the communications node 1 sends data to the communications node 2 on the selected time-frequency resource. The mode 2 has an advantage of a low delay and high flexibility. However, different communications nodes may select a same time-frequency resource from the time-frequency resource pool for communication between communications nodes, and in this case, a conflict is caused, and reliability is relatively low.

A base station (BS) used in this application is an apparatus that is deployed in a radio access network and that is configured to provide a wireless communications service for a communications node. The base station may include a macro base station, a micro base station, a relay node, an access point, and the like that are in various forms. In systems that use different radio access technologies, names of a device that has a base station function may be different. For example, in an LTE network, the device is referred to as an evolved NodeB (eNB or eNodeB), and in 3G network, the device is referred to as a NodeB (Node B), or a road side unit (RSU) in V2V communication. For ease of description, in this application, all the foregoing apparatuses that provide a wireless communications function for the communications node are collectively referred to as a base station or a BS.

The communications node used in this application may include a handheld device, an in-vehicle device, a wearable device, a computing device or another processing device connected to a wireless modem that provides the wireless communications function, and a communications node, a mobile station (MS), a terminal, terminal equipment, user equipment (UE), or the like that is in various forms. For ease of description, in this application, the devices mentioned above are collectively referred to as a communications node.

The embodiments of the present invention are described in further detail with reference to specific examples.

FIG. 2 shows a data sending method according to an embodiment of this application, and specific steps are as follows:
Step 21: A first communications node sends first request information to a base station, and the base station receives the first request information from the first communications node. The first request information is used to request first information from the base station, and the first information is used to indicate authorization of a first resource. The first request information may be a proximity service buffer status report (ProSe BSR). After receiving the ProSe BSR sent by the first communications node, the base station allocates, based on the ProSe BSR, a resource that may be used for communication between communications nodes. Optionally, when the first communications node has no resource used to send the first request information, the first communications node first sends a scheduling request (SR) to the base station, and after receiving the scheduling request, the base station allocates, to the first communications node, the resource used to send the first request information, and the first communications node may send the first request information to the base station on the resource allocated by the base station for sending the first request information. Optionally, the first information is used to indicate the resource used by the first communications node for the communication between communications nodes. Optionally, the first information is information in a mode 1.

In an optional embodiment, the first communications node determines first data, and that a first communications node sends first request information to a base station includes: The first communications node sends the first request information to the base station based on the first data. In an optional embodiment, the first data is service data of an event trigger type. For example, in V2X communication, when a first vehicle detects that the first vehicle is to collide with another vehicle, the first vehicle needs to send information of the first vehicle or the another vehicle to the another vehicle, such as a location, a speed, and a driving direction that are of the vehicle.

Step 22: The first communications node determines second information. The second information is used to indicate authorization of a second resource, and the second resource is selected by the first communications node from a preset resource. Optionally, the second information is used to indicate the resource used by the first communications node for the communication between communications nodes. In an optional embodiment, the first communications node selects, from a preset resource pool, the resource used for the communication between communications nodes, and determines the second information based on the selected resource. Optionally, the second information is information in a mode 2. Optionally, the first communications node determines the second information based on the first data.

In accordance with the claims, the first communications node determines a second timer parameter, and the first communications node determines second time based on the second timer parameter; or the first communications node receives a second timer parameter from the base station, and the first communications node determines second time based on the second timer parameter. The first communications node determines the second information at the second time. The second timer parameter includes a second duration parameter, and the first communications node determines the second time based on second start time and the second duration parameter. The second start time is time at which the first communications node determines the first data, or the second start time is time at which the first communications node sends the first request information to the base station.

Step 23: The first communications node determines third information, where the third information includes at least one of the first information and the second information. Optionally, the third information is used to indicate the resource used by the first communications node for the communication between communications nodes. Optionally, the third information may be the first information, or the third information may be the second information, or the third information may be the first information and the second information.

In accordance with the claims, the first communications node determines first time, and that the first communications node determines third information includes: the first communications node determines the third information based on the first time. The first time is determined by the first communications node based on a first timer parameter, and the first timer parameter may be preset. The first timer parameter includes a first duration parameter, and the first communications node determines the first time based on first start time and the first duration parameter. The first start time is the time at which the first communications node determines the first data, or the first start time is the time at which the first communications node sends the first request information to the base station. In an optional embodiment, the first start time is time at which the first communications node sends the scheduling request to the base station.

In an optional embodiment, the first communications node receives a first timer parameter from the base station, and the first communications node determines the first time based on the first timer parameter. The first timer parameter includes a first duration parameter, and the first communications node determines the first time based on first start time and the first duration parameter. The first start time is the time at which the first communications node determines the first data, or the first start time is the time at which the first communications node sends the first request information to the base station.

In an optional embodiment, the second start time is the same as the first start time, the second duration parameter is the same as the first duration parameter, and the second time is the same as the first time.

In an optional embodiment, before the first communications node determines the third information based on the first time, the base station sends the first information to the first communications node, and the first communications node receives the first information from the base station. Optionally, if the first communications node receives, before the first time, the first information sent by the base station, the first communications node determines that the third information is the first information.

In an optional embodiment, after the first communications node determines the third information based on the first time, the base station sends the first information to the first communications node, and the first communications node receives the first information from the base station. Optionally, if the first communications node does not receive, before the first time, the first information sent by the base station, the first communications node determines that the third information is the second information.

Step 24: The first communications node sends data to a second communications node by using a resource indicated by the third information, and the second communications node receives the data from the first communications node by using the resource indicated by the third information. In an optional embodiment, when the third information is the first information, the first communications node may send the first data to the second communications node by using a resource indicated by the first information; or the first communications node may send the first data to the base station by using a resource indicated by the first information, and then the base station sends the first data to the second communications node. In an optional embodiment, the data sent by the first communications node to the second communications node by using the resource indicated by the third information may be the first data, or may be other data different from the first data. For example, although the first information is requested by the first communications node based on the first data and/or the second information is determined by the first communications node based on the first data, after the first communications node determines the third information, the first communications node may send the first data or second data to the second communications node by using the resource indicated by the third information, and the second data and the first data are different data.

In an optional embodiment, the first communications node sends, in a first transmission period, the first request information to the base station based on the first data. The first time is k milliseconds before start time of a second transmission period, k is a positive integer, and the second transmission period is a next transmission period of the first transmission period.

In an optional embodiment, before the first communications node determines the first data, step 20 may be included. The first communications node receives indication information from the base station, and the indication information is used to indicate that the first communications node supports a first mode (for example, the mode 1) and a second mode (for example, the mode 2). The first mode is a mode in which the first communications node sends data to the second communications node by using the resource indicated by the first information, and the second mode is a mode in which the first communications node sends data to the second communications node by using a resource indicated by the second information. Optionally, the indication information received by the first communications node from the base station includes the first timer parameter and the second timer parameter. Optionally, the indication information includes at least one logical channel identifier, and is used to indicate that the first data in a logical channel corresponding to the logical channel identifier may be sent based on at least one of the first information and the second information. Optionally, the indication information may be sent by using RRC dedicated signaling, or may be sent by using system broadcast information.

According to this embodiment of the present invention, the communications node determines the third information, the third information includes at least one of the first information and the second information, the first information is allocated by the base station, the second information is determined by the communications node, and the communications node flexibly selects information for communication between communications nodes. In this way, flexibility of the communication between the communications nodes is improved.

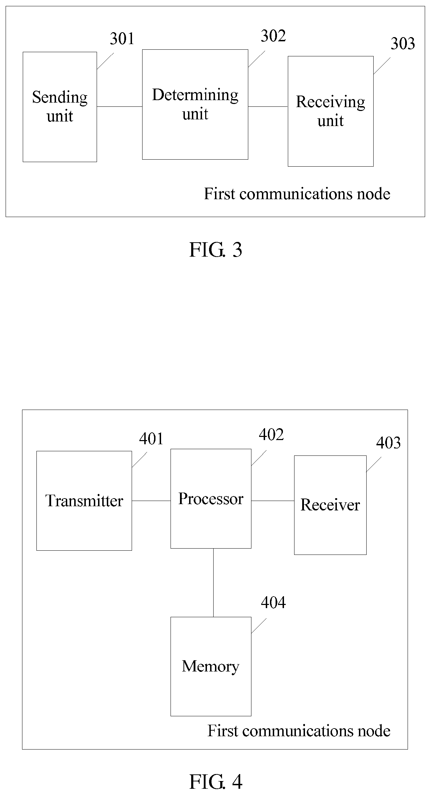

FIG. 3 is a possible schematic structural diagram of a first communications node configured to perform the method in the embodiment in FIG. 2. The communications node includes a sending unit 301 and a determining unit 302.

The sending unit 301 is configured to send first request information to a base station, where the first request information is used to request first information from the base station, and the first information is used to indicate authorization of a first resource. The first request information may be a proximity service buffer status report (ProSe BSR). After receiving the ProSe BSR sent by the first communications node, the base station allocates, based on the ProSe BSR, a resource that may be used for communication between communications nodes. Optionally, when the first communications node has no resource used to send the first request information, the sending unit 301 first sends a scheduling request (SR) to the base station, and after receiving the scheduling request, the base station allocates, to the first communications node, the resource used to send the first request information, and the sending unit 301 may send the first request information to the base station on the resource allocated by the base station for sending the first request information. Optionally, the first information is used to indicate the resource used by the first communications node for the communication between communications nodes. Optionally, the first information is information in a mode 1.

In an optional embodiment, the determining unit 302 determines first data; and that the sending unit 301 sends first request information to a base station includes: the determining unit 302 instructs, based on the first data, the sending unit 301 to send the first request information to the base station. In an optional embodiment, the first data is service data of an event trigger type. For example, in V2X communication, when a first vehicle detects that the first vehicle is to collide with another vehicle, the first vehicle needs to send information of the first vehicle or the another vehicle to the another vehicle, such as a location, a speed, and a driving direction that are of the vehicle.

The determining unit 302 is configured to determine second information, where the second information is used to indicate authorization of a second resource, and the second resource is selected by the first communications node from a preset resource. In an optional embodiment, the determining unit 302 selects, from a preset resource pool, the resource used for the communication between communications nodes, and determines the second information based on the selected resource. Optionally, the second information is information in a mode 2. Optionally, the determining unit 302 determines the second information based on the first data.

In accordance with the claims, the determining unit 302 determines a second timer parameter, and the determining unit 302 determines second time based on the second timer parameter; or the receiving unit 303 receives a second timer parameter from the base station, and the determining unit 302 determines second time based on the second timer parameter. The determining unit 302 determines the second information at the second time. Optionally, the second timer parameter includes a second duration parameter, and the determining unit 302 determines the second time based on second start time and the second duration parameter. The second start time is time at which the determining unit 302 determines the first data, or the second start time is time at which the sending unit 301 sends the first request information to the base station.

The determining unit 302 is further configured to determine third information, where the third information includes at least one of the first information and the second information. The third information is used to indicate the resource used by the first communications node for the communication between communications nodes. Optionally, the third information may be the first information, or the third information may be the second information, or the third information may be the first information and the second information.

In accordance with the claims, the determining unit 302 determines first time, and that the determining unit 302 determines third information includes: the determining unit 302 determines the third information based on the first time. The first time is determined by the determining unit 302 based on a first timer parameter, and the first timer parameter may be preset. The first timer parameter includes a first duration parameter, and the determining unit 302 determines the first time based on first start time and the first duration parameter. The first start time is the time at which the determining unit 302 determines the first data, or the first start time is the time at which the sending unit 301 sends the first request information to the base station. In an optional embodiment, the first start time is time at which the sending unit 301 sends the scheduling request to the base station.

In an optional embodiment, the receiving unit 303 receives a first timer parameter from the base station, and the determining unit 302 determines the first time based on the first timer parameter. In an optional embodiment, the first timer parameter includes a first duration parameter, and the determining unit 302 determines the first time based on first start time and the first duration parameter. The first start time is the time at which the determining unit 302 determines the first data, or the first start time is the time at which the sending unit 301 sends the first request information to the base station.

In an optional embodiment, the second start time is the same as the first start time, the second duration parameter is the same as the first duration parameter, and the second time is the same as the first time.

In an optional embodiment, before the determining unit 302 determines the third information based on the first time, the base station sends the first information to the first communications node, and the receiving unit 303 receives the first information from the base station. Optionally, if the receiving unit 303 receives, before the first time, the first information sent by the base station, the determining unit 302 determines that the third information is the first information.

In an optional embodiment, after the determining unit 302 determines the third information based on the first time, the base station sends the first information to the first communications node, and the receiving unit 303 receives the first information from the base station. Optionally, if the receiving unit 303 does not receive, before the first time, the first information sent by the base station, the determining unit 302 determines that the third information is the second information.

The sending unit 301 is further configured to send data to a second communications node by using a resource indicated by the third information. In an optional embodiment, when the third information is the first information, the sending unit 301 may send the first data to the second communications node by using a resource indicated by the first information; or the sending unit 301 may send the first data to the base station by using a resource indicated by the first information, and then the base station sends the first data to the second communications node. In an optional embodiment, the data sent by the sending unit 301 to the second communications node by using the resource indicated by the third information may be the first data, or may be other data different from the first data. For example, although the first information is requested by the sending unit 301 from the base station based on the first data and/or the second information is determined by the determining unit 302 based on the first data, after the determining unit 302 determines the third information, the sending unit 301 may send the first data or second data to the second communications node by using the resource indicated by the third information, and the second data and the first data are different data.

In an optional embodiment, the determining unit 302 instructs, in a first transmission period based on the first data, the sending unit 301 to send the first request information to the base station. The first time is k milliseconds before start time of a second transmission period, k is a positive integer, and the second transmission period is a next transmission period of the first transmission period.

In an optional embodiment, before the determining unit 302 determines the first data, the receiving unit 303 may further receive indication information from the base station, and the indication information is used to indicate that the first communications node supports a first mode (for example, the mode 1) and a second mode (for example, the mode 2). The first mode is a mode in which the sending unit 301 sends data to the second communications node by using the resource indicated by the first information, and the second mode is a mode in which the sending unit 301 sends data to the second communications node by using a resource indicated by the second information. Optionally, the indication information received by the receiving unit 303 from the base station includes the first timer parameter and the second timer parameter. Optionally, the indication information includes at least one logical channel identifier, and is used to indicate that the first data in a logical channel corresponding to the logical channel identifier may be sent based on at least one of the first information and the second information. Optionally, the indication information may be sent by using RRC dedicated signaling, or may be sent by using system broadcast information.

According to this embodiment of the present invention, the communications node determines the third information, the third information includes at least one of the first information and the second information, the first information is allocated by the base station, the second information is determined by the communications node, and the communications node flexibly selects information for communication between communications nodes. In this way, flexibility of the communication between the communications nodes is improved.

In an optional embodiment, the sending unit 301 may be a transmitter 401, the processing unit 302 may be a processor 402, the receiving unit 303 may be a receiver 403, and the transmitter 401 and the receiver 403 may be replaced with a transceiver. Optionally, the communications node may further include a memory 404, and the memory 404 is configured to store program code and data of the communications node. Specifically, as shown in FIG. 4, the communications node includes the transmitter 401, the processor 402, the receiver 403, and the memory 404.

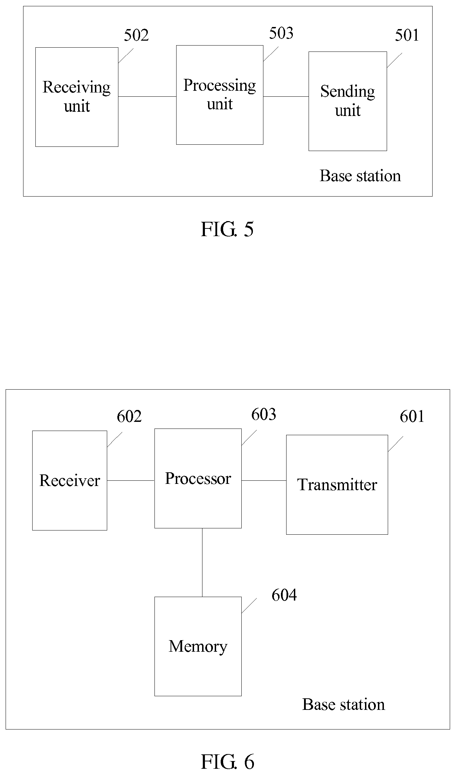

FIG. 5 is a possible schematic structural diagram of a base station configured to perform the method used in the embodiment in FIG. 2, and the base station includes a sending unit 501, a receiving unit 502, and a processing unit 503.

The sending unit 501 is configured to send indication information to a first communications node, where the indication information is used to indicate that data can be sent based on at least one of first information and second information. The first information is used to indicate authorization of a first resource, and the second information is used to indicate authorization of a second resource. The indication information is consistent with that in the embodiment in FIG. 2.

In an optional embodiment, the indication information includes at least one logical channel identifier, and the at least one logical channel identifier is used to indicate at least one logical channel used for sending the data based on the at least one of the first information and the second information.

The receiving unit 502 is configured to receive first request information sent by the first communications node, where the first request information is sent by the first communications node to the base station based on the data. The first request information is consistent with that in the embodiment in FIG. 2.

The processing unit 503 is configured to instruct, based on the first request information, the sending unit to send the first information to the first communications node. The first information is consistent with that in the embodiment in FIG. 2.

In an optional embodiment, the sending unit 501 may be a transmitter 601, the receiving unit 502 may be a receiver 602, the processing unit 503 may be a processor 603, and the transmitter 601 and the receiver 602 may be replaced with a transceiver. Optionally, the base station may further include a memory 604, and the memory 604 is configured to store program code and data of the communications node. Specifically, as shown in FIG. 6, the communications node includes the transmitter 601, the receiver 602, the processor 603, and the memory 604.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

In a case that no conflict occurs, the embodiments in the present invention and the features in the embodiments may be mutually combined.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data sending method, comprising:
sending (21), by a first communications node, first request information to a base station, wherein the first request information is used to request first information from the base station, and the first information is used to indicate authorization of a first resource;
determining (22), by the first communications node, second information, wherein the second information is used to indicate authorization of a second resource, and the second resource is selected by the first communications node from a preset resource;
wherein the authorization of the resource means an authorization to use the resource;
determining (23), by the first communications node, a first time comprising determining, by the first communications node, a first timer parameter, and determining, by the first communications node, the first time based on the first timer parameter; or receiving, by the first communications node, a first timer parameter from the base station, and determining, by the first communications node, the first time based on the first timer parameter^{1;}
determining (23), by the first communications node, third information based on the first time, wherein
if the first communications node does not receive, before the first time, the first information sent by the base station, determining, by the first communications node, that the third information is the second information; or
if the first communications node receives, before the first time, the first information sent by the base station, determining, by the first communications node, that the third information is the first information,
wherein the third information comprises at least one of the first information and the second information; and
sending (24), by the first communications node, data to a second communications node by using a resource indicated by the third information; wherein
the first timer parameter comprises a first duration parameter; and
the determining, by the first communications node, the first time based on the first timer parameter comprises:
determining, by the first communications node, the first time based on first start time and the first duration parameter; wherein
the first start time is time at which the first communications node determines the first data, or
the first start time is time at which the first communications node sends the first request information to the base station based on the first data; **characterized by**:
determining, by the first communications node, a second timer parameter, and determining, by the first communications node, second time based on the second timer parameter; or receiving, by the first communications node, a second timer parameter from the base station, and determining, by the first communications node, second time based on the second timer parameter; and
the determining, by the first communications node, second information comprises:
determining, by the first communications node, the second information at the second time; and wherein
the second timer parameter comprises a second duration parameter; and
the determining, by the first communications node, second time based on the second timer parameter comprises:
determining, by the first communications node, the second time based on second start time and the second duration parameter; wherein
the second start time is the time at which the first communications node determines the first data, or
the second start time is the time at which the first communications node sends the first request information to the base station based on the first data.

2. The method according to claim 1, wherein:
the first communications node receives indication information from the base station, and the indication information is used to indicate that the first communications node supports a first mode and a second mode, wherein the first mode is a mode in which the first communications node sends data to the second communications node by using a resource indicated by the first information, and the second mode is a mode in which the first communications node sends data to the second communications node by using a resource indicated by the second information.

3. The method according to claim 2, wherein
the indication information comprises at least one logical channel identifier, and the at least one logical channel identifier is used to indicate at least one logical channel used for sending the data based on the at least one of the first information and the second information.

4. The method according to any one of claims 1 to 3, wherein the method further comprises:
determining, by the first communications node, first time, wherein the first communications node sends, in a first transmission period, the first request information to the base station and wherein the first time is k milliseconds before start time of a second transmission period, k is a positive integer, and the second transmission period is a next transmission period of the first transmission period; and
the determining, by the first communications node, third information comprises:
determining, by the first communications node, the third information based on the first time.

5. The method according to claim 4, wherein
before the determining, by the first communications node, the third information based on the first time, the first communications node receives the first information from the base station.

6. A first communications node, comprising:
a sending unit (301), configured to send first request information to a base station, wherein the first request information is used to request first information from the base station, and the first information is used to indicate authorization of a first resource; and
a determining unit (302), configured to determine second information, wherein the second information is used to indicate authorization of a second resource, and the second resource is selected by the first communications node from a preset resource; wherein
wherein the authorization of the resource means an authorization to use the resource;
the determining unit (302) is further configured to determine a first time by determining, by the determining unit (302), a first timer parameter, and determining, by the determining unit (302), the first time based on the first timer parameter²; or a receiving unit is further configured to receive the first timer parameter from the base station, and
that the determining unit is further configured to determine first time comprises: determining, by the determining unit, the first time based on the first timer parameter; and
the determining unit (302) is further configured to determine third information, based on the first time;
the receiving unit (303) configured to receive the first information from the base station, wherein
if the receiving unit does not receive, before the first time, the first information sent by the base station, determining, by the determining unit, that the third information is the second information; or
if the receiving unit receives, before the first time, the first information sent by the base station, determining, by the determining unit, that the third information is the first information,
wherein the third information comprises at least one of the first information and the second information; and
the sending unit (301) is further configured to send data to a second communications node by using a resource indicated by the third information; and
the first timer parameter comprises a first duration parameter; and
the determining, by the determining unit, the first time based on the first timer parameter comprises:
determining, by the determining unit, the first time based on first start time and the first duration parameter; wherein
the first start time is time at which the first communications node determines the first data, or
the first start time is time at which the sending unit sends the first request information to the base station; **characterized in that**:
the determining unit is configured to determine a second timer parameter, and the determining unit determines second time based on the second timer parameter; or the receiving unit receives a second timer parameter from the base station, and the determining unit determines second time based on the second timer parameter; and
the determining, by the determining unit, second information comprises:
determining, by the determining unit, the second information at the second time; and wherein
the second timer parameter comprises a second duration parameter; and
the determining, by the determining unit, the second time based on the second timer parameter comprises:
determining, by the determining unit, the second time based on second start time and the second duration parameter; wherein
the second start time is the time at which the first communications node determines the first data, or
the second start time is the time at which the sending unit sends the first request information to the base station.

7. The first communications node according to claim 6, wherein the first communications node further comprises a receiving unit; and
the receiving unit is configured to receive indication information from the base station, wherein the indication information is used to indicate that the first communications node supports a first mode and a second mode, the first mode is a mode in which the first communications node sends data to the second communications node by using a resource indicated by the first information, and the second mode is a mode in which the first communications node sends data to the second communications node by using a resource indicated by the second information.

8. The first communications node according to claim 7, wherein:
the indication information comprises at least one logical channel identifier, and the at least one logical channel identifier is used to indicate at least one logical channel used for sending the data based on the at least one of the first information and the second information.

9. The first communications node according to any one of claims 6 to 8, wherein:
the determining unit is further configured to determine first time, wherein the first communications node sends, in a first transmission period, the first request information to the base station and wherein the first time is k milliseconds before start time of a second transmission period, k is a positive integer, and the second transmission period is a next transmission period of the first transmission period; and
that the determining unit is further configured to determine third information comprises:
determining, by the determining unit, the third information based on the first time.

10. The first communications node according to claim 9, wherein:
before the determining unit determines the third information based on the first time, the receiving unit receives the first information from the base station.

11. The data sending method according to claim 1, further comprising:
sending (20), by a base station (501, 502, 503), indication information to a first communications node, wherein the indication information is used to indicate that data can be sent based on at least one of first information and second information, the first information is used to indicate authorization of a first resource, and the second information is used to indicate authorization of a second resource;
wherein the authorization of the resource means an authorization to use the resource;
receiving (21), by the base station, first request information sent by the first communications node, wherein the first request information is sent by the first communications node to the base station based on the data; and
sending, by the base station, the first information to the first communications node based on the first request information.

12. The method according to claim 11, wherein:
the indication information comprises at least one logical channel identifier, and the at least one logical channel identifier is used to indicate at least one logical channel used for sending the data based on the at least one of the first information and the second information.

13. A system, comprising:
a first communications node according to one or more of claims 6 to 10, and
a base station, comprising:
a sending unit (501), configured to send the indication information to the first communications node, wherein the indication information is used to indicate that data can be sent based on at least one of the first information and the second information, the first information is used to indicate authorization of the first resource, and the second information is used to indicate authorization of the second resource;
wherein the authorization of the resource means an authorization to use the resource;
a receiving unit (502), configured to receive the first request information sent by the first communications node, wherein the first request information is sent by the first communications node to the base station based on the data; and
a determining unit (503), configured to instruct, based on the first request information, the sending unit to send the first information to the first communications node.

## Patentansprüche

1. Datensendeverfahren, das umfasst:
Senden (21), durch einen ersten Kommunikationsknoten, von ersten Anforderungsinformationen an eine Basisstation, wobei die ersten Anforderungsinformationen verwendet werden, um erste Informationen von der Basisstation anzufordern, und die ersten Informationen verwendet werden, um eine Autorisierung einer ersten Ressource anzugeben;
Bestimmen (22), durch den ersten Kommunikationsknoten, von zweiten Informationen, wobei die zweiten Informationen verwendet werden, um eine Autorisierung einer zweiten Ressource anzugeben, und die zweite Ressource durch den ersten Kommunikationsknoten aus einer voreingestellten Ressource ausgewählt wird;
wobei die Autorisierung der Ressource eine Autorisierung zur Verwendung der Ressource bedeutet;
Bestimmen (23), durch den ersten Kommunikationsknoten, einer ersten Zeit, das ein Bestimmen, durch den ersten Kommunikationsknoten, eines ersten Zeitgeberparameters und ein Bestimmen, durch den ersten Kommunikationsknoten, der ersten Zeit basierend auf dem ersten Zeitgeberparameter umfasst; oder Empfangen, durch den ersten Kommunikationsknoten, eines ersten Zeitgeberparameters von der Basisstation und
Bestimmen, durch den ersten Kommunikationsknoten, der ersten Zeit basierend auf dem ersten Zeitgeberparameter¹;
Bestimmen (23), durch den ersten Kommunikationsknoten, von dritten Informationen basierend auf der ersten Zeit, wobei
wenn der erste Kommunikationsknoten vor dem ersten Zeitpunkt die von der Basisstation gesendeten ersten Informationen nicht empfängt, Bestimmen, durch den ersten Kommunikationsknoten, dass die dritten Informationen die zweiten Informationen sind;
oder
wenn der erste Kommunikationsknoten vor dem ersten Zeitpunkt die von der Basisstation gesendeten ersten Informationen empfängt, Bestimmen, durch den ersten Kommunikationsknoten, dass die dritten Informationen die ersten Informationen sind,
wobei die dritten Informationen mindestens eines von den ersten Informationen und den zweiten Informationen umfassen; und
Senden (24), durch den ersten Kommunikationsknoten, von Daten an einen zweiten Kommunikationsknoten durch Verwenden einer Ressource, die durch die dritten Informationen angegeben wird; wobei
der erste Zeitgeberparameter einen ersten Dauerparameter umfasst; und
das Bestimmen, durch den ersten Kommunikationsknoten, der ersten Zeit basierend auf dem ersten Zeitgeberparameter umfasst:
Bestimmen, durch den ersten Kommunikationsknoten, der ersten Zeit basierend auf einer ersten Startzeit und dem ersten Dauerparameter; wobei
die erste Startzeit eine Zeit ist, zu der der erste Kommunikationsknoten die ersten Daten bestimmt,
oder
die erste Startzeit eine Zeit ist, zu der der erste Kommunikationsknoten die ersten Anforderungsinformationen an die Basisstation basierend auf den ersten Daten sendet;
**gekennzeichnet durch:**
Bestimmen, durch den ersten Kommunikationsknoten, eines zweiten Zeitgeberparameters, und Bestimmen, durch den ersten Kommunikationsknoten, einer zweiten Zeit basierend auf dem zweiten Zeitgeberparameter; oder Empfangen, durch den ersten Kommunikationsknoten, eines zweiten Zeitgeberparameters von der Basisstation, und Bestimmen, durch den ersten Kommunikationsknoten, einer zweiten Zeit basierend auf dem zweiten Zeitgeberparameter; und
das Bestimmen, durch den ersten Kommunikationsknoten, von zweiten Informationen Folgendes umfasst:
Bestimmen, durch den ersten Kommunikationsknoten, der zweiten Informationen zu dem zweiten Zeitpunkt; und wobei
der zweite Zeitgeberparameter einen zweiten Dauerparameter umfasst; und
das Bestimmen, durch den ersten Kommunikationsknoten, einer zweiten Zeit basierend auf dem zweiten Zeitgeberparameter umfasst:
Bestimmen, durch den ersten Kommunikationsknoten, der zweiten Zeit basierend auf der zweiten Startzeit und dem zweiten Dauerparameter; wobei
die zweite Startzeit die Zeit ist, zu der der erste Kommunikationsknoten die ersten Daten bestimmt, oder
die zweite Startzeit die Zeit ist, zu der der erste Kommunikationsknoten die ersten Anforderungsinformationen an die Basisstation basierend auf den ersten Daten sendet.

2. Verfahren nach Anspruch 1, wobei:
der erste Kommunikationsknoten Angabeinformationen von der Basisstation empfängt und die Angabeinformationen verwendet werden, um anzugeben, dass der erste Kommunikationsknoten einen ersten Modus und einen zweiten Modus unterstützt, wobei der erste Modus ein Modus ist, in dem der erste Kommunikationsknoten Daten an den zweiten Kommunikationsknoten sendet, indem eine Ressource verwendet wird, die durch die ersten Informationen angegeben wird, und der zweite Modus ein Modus ist, in dem der erste Kommunikationsknoten Daten an den zweiten Kommunikationsknoten sendet,
indem eine Ressource verwendet wird, die durch die zweiten Informationen angegeben wird.

3. Verfahren nach Anspruch 2, wobei
die Angabeinformationen mindestens eine logische Kanalkennung umfassen und die mindestens eine logische Kanalkennung verwendet wird, um mindestens einen logischen Kanal anzugeben, der zum Senden der Daten basierend auf mindestens einem von den ersten Informationen und den zweiten Informationen verwendet wird.

4. Verfahren nach einem der Ansprüche 1 bis 3, wobei das Verfahren ferner umfasst:
Bestimmen, durch den ersten Kommunikationsknoten, einer ersten Zeit, wobei der erste Kommunikationsknoten in einer ersten Übertragungsperiode die ersten Anforderungsinformationen an die Basisstation sendet und wobei die erste Zeit k Millisekunden vor der Startzeit einer zweiten Übertragungsperiode beträgt, k eine positive ganze Zahl ist und die zweite Übertragungsperiode eine nächste Übertragungsperiode der ersten Übertragungsperiode ist; und
das Bestimmen, durch den ersten Kommunikationsknoten, von dritten Informationen Folgendes umfasst:
Bestimmen, durch den ersten Kommunikationsknoten, der dritten Informationen basierend auf der ersten Zeit.

5. Verfahren nach Anspruch 4, wobei
vor dem Bestimmen, durch den ersten Kommunikationsknoten, der dritten Informationen basierend auf der ersten Zeit, der erste Kommunikationsknoten die ersten Informationen von der Basisstation empfängt.

6. Erster Kommunikationsknoten, der umfasst:
eine Sendeeinheit (301), die konfiguriert ist zum Senden von ersten Anforderungsinformationen an eine Basisstation, wobei die ersten Anforderungsinformationen verwendet werden, um erste Informationen von der Basisstation anzufordern, und die ersten Informationen verwendet werden, um eine Autorisierung einer ersten Ressource anzugeben; und
eine Bestimmungseinheit (302), die konfiguriert ist zum Bestimmen von zweiten Informationen, wobei die zweiten Informationen verwendet werden, um eine Autorisierung einer zweiten Ressource anzugeben, und die zweite Ressource durch den ersten Kommunikationsknoten aus einer voreingestellten Ressource ausgewählt wird; wobei die Autorisierung der Ressource eine Autorisierung zur Verwendung der Ressource bedeutet;
die Bestimmungseinheit (302) ferner konfiguriert ist, um eine erste Zeit zu bestimmen, indem durch die Bestimmungseinheit (302) ein erster Zeitgeberparameter bestimmt wird, und indem durch die Bestimmungseinheit (302) die erste Zeit basierend auf dem ersten Zeitgeberparameter² bestimmt wird; oder eine Empfangseinheit ferner konfiguriert ist, um den ersten Zeitgeberparameter von der Basisstation zu empfangen, und
dass die Bestimmungseinheit ferner konfiguriert ist, um die erste Zeit zu bestimmen, folgendes umfasst: Bestimmen, durch die Bestimmungseinheit, der ersten Zeit basierend auf dem ersten Zeitgeberparameter; und
die Bestimmungseinheit (302) ferner konfiguriert ist, um dritte Informationen basierend auf der ersten Zeit zu bestimmen;
die Empfangseinheit (303) konfiguriert ist, um die ersten Informationen von der Basisstation zu empfangen, wobei
wenn die Empfangseinheit vor dem ersten Zeitpunkt nicht die von der Basisstation gesendeten ersten Informationen empfängt, Bestimmen, durch die Bestimmungseinheit, dass die dritten Informationen die zweiten Informationen sind; oder
wenn die Empfangseinheit vor dem ersten Zeitpunkt die von der Basisstation gesendeten ersten Informationen empfängt, Bestimmen, durch die Bestimmungseinheit, dass die dritten Informationen die ersten Informationen sind,
wobei die dritten Informationen mindestens eines von den ersten Informationen und den zweiten Informationen umfassen; und
die Sendeeinheit (301) ferner konfiguriert ist zum Senden von Daten an einen zweiten Kommunikationsknoten durch Verwenden einer Ressource, die durch die dritten Informationen angegeben wird; und
der erste Zeitgeberparameter einen ersten Dauerparameter umfasst; und
das Bestimmen, durch die Bestimmungseinheit, der ersten Zeit basierend auf dem ersten Zeitgeberparameter umfasst:
Bestimmen, durch die Bestimmungseinheit, der ersten Zeit basierend auf der ersten Startzeit und dem ersten Dauerparameter; wobei
die erste Startzeit eine Zeit ist, zu der der erste Kommunikationsknoten die ersten Daten bestimmt, oder
die erste Startzeit eine Zeit ist, zu der die Sendeeinheit die ersten Anforderungsinformationen an die Basisstation sendet; **dadurch gekennzeichnet, dass:**
die Bestimmungseinheit konfiguriert ist, um einen zweiten Zeitgeberparameter zu bestimmen, und die Bestimmungseinheit eine zweite Zeit basierend auf dem zweiten Zeitgeberparameter bestimmt; oder die Empfangseinheit einen zweiten Zeitgeberparameter von der Basisstation empfängt und die Bestimmungseinheit eine zweite Zeit basierend auf dem zweiten Zeitgeberparameter bestimmt; und
das Bestimmen, durch die Bestimmungseinheit, von zweiten Informationen Folgendes umfasst:
Bestimmen, durch die Bestimmungseinheit, der zweiten Informationen zu der zweiten Zeit; und wobei
der zweite Zeitgeberparameter einen zweiten Dauerparameter umfasst; und
das Bestimmen, durch die Bestimmungseinheit, der zweiten Zeit basierend auf dem zweiten Zeitgeberparameter umfasst:
Bestimmen, durch die Bestimmungseinheit, der zweiten Zeit basierend auf der zweiten Startzeit und dem zweiten Dauerparameter; wobei
die zweite Startzeit die Zeit ist, zu der der erste Kommunikationsknoten die ersten Daten bestimmt, oder
die zweite Startzeit die Zeit ist, zu der die Sendeeinheit die ersten Anforderungsinformationen an die Basisstation sendet.

7. Erster Kommunikationsknoten nach Anspruch 6, wobei der erste Knoten ferner eine Empfangseinheit umfasst; und
die Empfangseinheit konfiguriert ist, um Angabeinformationen von der Basisstation zu empfangen, wobei die Angabeinformationen verwendet werden, um anzugeben, dass der erste Kommunikationsknoten einen ersten Modus und einen zweiten Modus unterstützt, der erste Modus ein Modus ist, in dem der erste Kommunikationsknoten Daten an den zweiten Kommunikationsknoten sendet, indem eine Ressource verwendet wird, die durch die ersten Informationen angegeben wird, und der zweite Modus ein Modus ist, in dem der erste Kommunikationsknoten Daten an den zweiten Kommunikationsknoten sendet, indem eine Ressource verwendet wird, die durch die zweiten Informationen angegeben wird.

8. Erster Kommunikationsknoten nach Anspruch 7, wobei:
die Angabeinformationen mindestens eine logische Kanalkennung umfassen und die mindestens eine logische Kanalkennung verwendet wird, um mindestens einen logischen Kanal anzugeben, der zum Senden der Daten basierend auf mindestens einem von den ersten Informationen und den zweiten Informationen verwendet wird.

9. Erster Kommunikationsknoten nach einem der Ansprüche 6 bis 8, wobei:
die Bestimmungseinheit ferner konfiguriert ist, um die erste Zeit zu bestimmen, wobei der erste Kommunikationsknoten in einer ersten Übertragungsperiode die ersten Anforderungsinformationen an die Basisstation sendet und wobei die erste Zeit k Millisekunden vor der Startzeit einer zweiten Übertragungsperiode beträgt, k eine positive ganze Zahl ist und die zweite Übertragungsperiode eine nächste Übertragungsperiode der ersten Übertragungsperiode ist; und
dass die Bestimmungseinheit ferner konfiguriert ist, um dritte Informationen zu bestimmen, umfasst Folgendes:
Bestimmen, durch die Bestimmungseinheit, der dritten Informationen basierend auf der ersten Zeit.

10. Erster Kommunikationsknoten nach Anspruch 9, wobei:
bevor die Bestimmungseinheit die dritten Informationen basierend auf der ersten Zeit bestimmt, die Empfangseinheit die ersten Informationen von der Basisstation empfängt.

11. Datensendeverfahren nach Anspruch 1, das ferner umfasst:
Senden (20), durch eine Basisstation (501, 502, 503), von Angabeinformationen an einen ersten Kommunikationsknoten, wobei die Angabeinformationen verwendet werden, um anzugeben, dass Daten basierend auf mindestens einem von ersten Informationen und
zweiten Informationen gesendet werden können, wobei die ersten Informationen verwendet werden, um eine Autorisierung einer ersten Ressource anzugeben, und die zweiten Informationen verwendet werden, um eine Autorisierung einer zweiten Ressource anzugeben;
wobei die Autorisierung der Ressource eine Autorisierung zur Verwendung der Ressource bedeutet;
Empfangen (21), durch die Basisstation, von ersten Anforderungsinformationen, die durch den ersten Kommunikationsknoten gesendet werden, wobei die ersten Anforderungsinformationen durch den ersten Kommunikationsknoten an die Basisstation basierend auf den Daten gesendet werden; und
Senden, durch die Basisstation, der ersten Informationen an den ersten Kommunikationsknoten basierend auf den ersten Anforderungsinformationen.

12. Verfahren nach Anspruch 11, wobei:
die Angabeinformationen mindestens eine logische Kanalkennung umfassen und die mindestens eine logische Kanalkennung verwendet wird, um mindestens einen logischen Kanal anzugeben, der zum Senden der Daten basierend auf mindestens einem von den ersten Informationen und den zweiten Informationen verwendet wird.

13. System, das umfasst:
einen ersten Kommunikationsknoten nach einem oder mehreren der Ansprüche 6 bis 10 und
eine Basisstation, die umfasst:
eine Sendeeinheit (501), die konfiguriert ist, um die Angabeinformationen an den ersten Kommunikationsknoten zu senden, wobei die Angabeinformationen verwendet werden, um anzugeben, dass Daten basierend auf mindestens einem von den ersten Informationen und den zweiten Informationen gesendet werden können, wobei die ersten Informationen verwendet werden, um die Autorisierung der ersten Ressource anzugeben, und die zweiten Informationen verwendet werden, um die Autorisierung der zweiten Ressource anzugeben;
wobei die Autorisierung der Ressource eine Autorisierung zur Verwendung der Ressource bedeutet;
eine Empfangseinheit (502), die konfiguriert ist, um die ersten Anforderungsinformationen, die durch den ersten Kommunikationsknoten gesendet werden, zu empfangen, wobei die ersten Anforderungsinformationen durch den ersten Kommunikationsknoten an die Basisstation basierend auf den Daten gesendet werden; und
eine Bestimmungseinheit (503), die konfiguriert ist, um basierend auf den ersten Anforderungsinformationen die Sendeeinheit anzuweisen, die ersten Informationen an den ersten Kommunikationsknoten zu senden.

## Revendications

1. Procédé d'envoi de données, comprenant :
l'envoi (21), par un premier noeud de communications, de premières informations de demande à une station de base, dans lequel les premières informations de demande sont utilisées pour demander des premières informations à partir de la station de base, et les premières informations sont utilisées pour indiquer une autorisation d'une première ressource ;
la détermination (22), par le premier noeud de communications, de deuxièmes informations, dans lequel les deuxièmes informations sont utilisées pour indiquer une autorisation d'une seconde ressource, et la seconde ressource est sélectionnée par le premier noeud de communications à partir d'une ressource prédéfinie ;
dans lequel l'autorisation de la ressource désigne une autorisation d'utilisation de la ressource ;
la détermination (23), par le premier noeud de communications, d'un premier moment comprenant la détermination, par le premier noeud de communications, d'un premier paramètre de temporisateur, et la détermination, par le premier noeud de communications, du premier moment sur la base du premier paramètre de temporisateur ; ou la réception, par le premier noeud de communications, d'un premier paramètre de temporisateur en provenance de la station de base, et la détermination, par le premier noeud de communications, du premier moment sur la base du premier paramètre de temporisateur¹ ;
la détermination (23), par le premier noeud de communications, de troisièmes informations sur la base du premier moment, dans lequel
si le premier noeud de communications ne reçoit pas, avant le premier moment, les premières informations envoyées par la station de base, le fait de déterminer, par le premier noeud de communications, que les troisièmes informations sont les deuxièmes informations ; ou
si le premier noeud de communications reçoit, avant le premier moment, les premières informations envoyées par la station de base, le fait de déterminer, par le premier noeud de communications, que les troisièmes informations sont les premières informations,
dans lequel les troisièmes informations comprennent au moins l'une parmi les premières informations et les deuxièmes informations ; et
l'envoi (24), par le premier noeud de communications, de données à un second noeud de communications à l'aide d'une ressource indiquée par les troisièmes informations ;
dans lequel
le premier paramètre de temporisateur comprend un premier paramètre de durée ; et la détermination, par le premier noeud de communications, du premier moment sur la base du premier paramètre de temporisateur comprend :
la détermination, par le premier noeud de communications, du premier moment sur la base d'un premier moment de début et du premier paramètre de durée ; dans lequel le premier moment de début est le moment auquel le premier noeud de communications détermine les premières données,
ou
le premier moment de début est un moment auquel le premier noeud de communications envoie les premières informations de demande à la station de base sur la base des premières données ; **caractérisé par :**
la détermination, par le premier noeud de communications, d'un second paramètre de temporisateur, et la détermination, par le premier noeud de communications, d'un second moment sur la base du second paramètre de temporisateur ; ou la réception,
par le premier noeud de communications, d'un second paramètre de temporisateur en provenance de la station de base, et la détermination, par le premier noeud de communications, d'un second moment sur la base du second paramètre de temporisateur ; et
la détermination, par le premier noeud de communications, de deuxièmes informations comprend :
la détermination, par le premier noeud de communications, des deuxièmes informations au second moment ; et dans lequel
le second paramètre de temporisateur comprend un second paramètre de durée ; et
la détermination, par le premier noeud de communications, d'un second moment sur la base du second paramètre de temporisateur comprend :
la détermination, par le premier noeud de communications, du second moment sur la base du second moment de début et du second paramètre de durée ; dans lequel le second moment de début est le moment auquel le premier noeud de communications détermine les premières données, ou
le second moment de début est le moment auquel le premier noeud de communications envoie les premières informations de demande à la station de base sur la base des premières données.

2. Procédé selon la revendication 1, dans lequel :
le premier noeud de communications reçoit des informations d'indication en provenance de la station de base, et les informations d'indication sont utilisées pour indiquer que le premier noeud de communications prend en charge un premier mode et un second mode, dans lequel le premier mode est un mode dans lequel le premier noeud de communications envoie des données au second noeud de communications à l'aide d'une ressource indiquée par les premières informations, et le second mode est un mode dans lequel le premier noeud de communications envoie des données au second noeud de communications à l'aide d'une ressource indiquée par les deuxièmes informations.

3. Procédé selon la revendication 2, dans lequel
les informations d'indication comprennent au moins un identifiant de canal logique, et l'au moins un identifiant de canal logique est utilisé pour indiquer au moins un canal logique utilisé pour envoyer les données sur la base d'au moins l'une parmi les premières informations et les deuxièmes informations.

4. Procédé selon l'une quelconque des revendications 1 à 3, dans lequel le procédé comprend en outre :
la détermination, par le premier noeud de communications, d'un premier moment, dans lequel le premier noeud de communications envoie, dans une première période de transmission, les premières informations de demande à la station de base et dans lequel le premier moment est k millisecondes avant le moment de début d'une seconde période de transmission, k est un nombre entier positif, et la seconde période de transmission est une période de transmission suivante de la première période de transmission ; et
la détermination, par le premier noeud de communications, de troisièmes informations comprend :
la détermination, par le premier noeud de communications, des troisièmes informations sur la base du premier moment.

5. Procédé selon la revendication 4, dans lequel
avant la détermination, par le premier noeud de communications, des troisièmes informations sur la base du premier moment, le premier noeud de communications reçoit les premières informations en provenance de la station de base.

6. Premier noeud de communications, comprenant :
une unité d'envoi (301), configurée pour envoyer des premières informations de demande à une station de base, dans lequel les premières informations de demande sont utilisées pour demander des premières informations à partir de la station de base, et les premières informations sont utilisées pour indiquer une autorisation d'une première ressource ; et
une unité de détermination (302), configurée pour déterminer des deuxièmes informations, dans lequel les deuxièmes informations sont utilisées pour indiquer une autorisation d'une seconde ressource, et la seconde ressource est sélectionnée par le premier noeud de communications à partir d'une ressource prédéfinie ; dans lequel dans lequel l'autorisation de la ressource désigne une autorisation d'utilisation de la ressource ;
l'unité de détermination (302) est en outre configurée pour déterminer un premier moment en déterminant, par l'unité de détermination (302), un premier paramètre de temporisateur, et en déterminant, par l'unité de détermination (302), le premier moment sur la base du premier paramètre de temporisateur² ; ou une unité de réception est en outre configurée pour recevoir le premier paramètre de temporisateur à partir de la station de base, et
l'unité de détermination configurée en outre pour déterminer un premier moment comprend : la détermination, par l'unité de détermination, du premier moment sur la base du premier paramètre de temporisateur ; et
l'unité de détermination (302) est en outre configurée pour déterminer des troisièmes informations, sur la base du premier moment ;
l'unité de réception (303) configurée pour recevoir les premières informations en provenance de la station de base, dans lequel
si l'unité de réception ne reçoit pas, avant le premier moment, les premières informations envoyées par la station de base, le fait de déterminer, par l'unité de détermination, que les troisièmes informations sont les deuxièmes informations ; ou
si l'unité de réception reçoit, avant le premier moment, les premières informations envoyées par la station de base, le fait de déterminer, par l'unité de détermination, que les troisièmes informations sont les premières informations,
dans lequel les troisièmes informations comprennent au moins l'une parmi les premières informations et les deuxièmes informations ; et
l'unité d'envoi (301) est en outre configurée pour envoyer des données à un second noeud de communications à l'aide d'une ressource indiquée par les troisièmes informations ; et
le premier paramètre de temporisateur comprend un premier paramètre de durée ; et
la détermination, par l'unité de détermination, du premier moment sur la base du premier paramètre de temporisateur comprend :
la détermination, par l'unité de détermination, du premier moment sur la base du premier moment de début et du premier paramètre de durée ; dans lequel le premier moment de début est le moment auquel le premier noeud de communications détermine les premières données, ou
le premier moment de début est le moment auquel l'unité d'envoi envoie les premières informations de demande à la station de base ; **caractérisé en ce que** :
l'unité de détermination est configurée pour déterminer un second paramètre de temporisateur, et l'unité de détermination détermine un second moment sur la base du second paramètre de temporisateur ; ou l'unité de réception reçoit un second paramètre de temporisateur en provenance de la station de base, et l'unité de détermination détermine un second moment sur la base du second paramètre de temporisateur ; et
la détermination, par l'unité de détermination, de deuxièmes informations comprend :
la détermination, par l'unité de détermination, des deuxièmes informations au second moment ; et dans lequel
le second paramètre de temporisateur comprend un second paramètre de durée ; et la détermination, par l'unité de détermination, du second moment sur la base du second paramètre de temporisateur comprend :
la détermination, par l'unité de détermination, du second moment sur la base du second moment de début et du second paramètre de durée ; dans lequel
le second moment de début est le moment auquel le premier noeud de communications détermine les premières données, ou
le second moment de début est le moment auquel l'unité d'envoi envoie les premières informations de demande à la station de base.

7. Premier noeud de communications selon la revendication 6, dans lequel le premier noeud de communications comprend en outre une unité de réception : et
l'unité de réception est configurée pour recevoir des informations d'indication en provenance de la station de base, dans lequel les informations d'indication sont utilisées pour indiquer que le premier noeud de communications prend en charge un premier mode et un second mode, le premier mode est un mode dans lequel le premier noeud de communications envoie des données au second noeud de communications à l'aide d'une ressource indiquée par les premières informations, et le second mode est un mode dans lequel le premier noeud de communications envoie des données au second noeud de communications à l'aide d'une ressource indiquée par les deuxièmes informations.

8. Premier noeud de communications selon la revendication 7, dans lequel :
les informations d'indication comprennent au moins un identifiant de canal logique, et l'au moins un identifiant de canal logique est utilisé pour indiquer au moins un canal logique utilisé pour envoyer les données sur la base d'au moins l'une parmi les premières informations et les deuxièmes informations.

9. Premier noeud de communications selon l'une quelconque des revendications 6 à 8, dans lequel :
l'unité de détermination est en outre configurée pour déterminer un premier moment, dans lequel le premier noeud de communications envoie, dans une première période de transmission, les premières informations de demande à la station de base et dans lequel le premier moment est k millisecondes avant le moment de début d'une seconde période de transmission, k est un nombre entier positif, et la seconde période de transmission est une période de transmission suivante de la première période de transmission ; et
l'unité de détermination configurée en outre pour déterminer des troisièmes informations comprend :
la détermination, par l'unité de détermination, des troisièmes informations sur la base du premier moment.

10. Premier noeud de communications selon la revendication 9, dans lequel :
avant que l'unité de détermination ne détermine les troisièmes informations sur la base du premier moment, l'unité de réception reçoit les premières informations en provenance de la station de base.

11. Procédé d'envoi de données selon la revendication 1, comprenant en outre :
l'envoi (20), par une station de base (501, 502, 503), d'informations d'indication à un premier noeud de communications, dans lequel les informations d'indication sont utilisées pour indiquer que des données peuvent être envoyées sur la base d'au moins l'une parmi des premières informations et des deuxièmes informations, les premières informations sont utilisées pour indiquer une autorisation d'une première ressource, et les deuxièmes informations sont utilisées pour indiquer une autorisation d'une seconde ressource ;
dans lequel l'autorisation de la ressource désigne une autorisation d'utilisation de la ressource ;
la réception (21), par la station de base, des premières informations de demande envoyées par le premier noeud de communications, dans lequel les premières informations de demande sont envoyées par le premier noeud de communications à la station de base sur la base des données ; et
l'envoi, par la station de base, des premières informations au premier noeud de communications sur la base des premières informations de demande.

12. Procédé selon la revendication 11, dans lequel :
les informations d'indication comprennent au moins un identifiant de canal logique, et l'au moins un identifiant de canal logique est utilisé pour indiquer au moins un canal logique utilisé pour envoyer les données sur la base d'au moins l'une parmi les premières informations et les deuxièmes informations.

13. Système, comprenant :
un premier noeud de communications selon une ou plusieurs des revendications 6 à 10, et
une station de base, comprenant :
une unité d'envoi (501), configurée pour envoyer les informations d'indication au premier noeud de communications, dans lequel les informations d'indication sont utilisées pour indiquer que des données peuvent être envoyées sur la base d'au moins l'une parmi les premières informations et les deuxièmes informations, les premières informations sont utilisées pour indiquer une autorisation de la première ressource, et les deuxièmes informations sont utilisées pour indiquer une autorisation de la seconde ressource ;
dans lequel l'autorisation de la ressource désigne une autorisation d'utilisation de la ressource ;
une unité de réception (502), configurée pour recevoir les premières informations de demande envoyées par le premier noeud de communications, dans lequel les premières informations de demande sont envoyées par le premier noeud de communications à la station de base sur la base des données ; et
une unité de détermination (503), configurée pour donner l'instruction, sur la base des premières informations de demande, à l'unité d'envoi d'envoyer les premières informations au premier noeud de communications.
